# EUROPEAN PATENT SPECIFICATION

(11) **EP 1 941 653 B1**
(45) Date of publication and mention of the grant of the patent: **04.11.2020**
(21) Application number: 06809570.2
(22) Date of filing: 11.10.2006
(51) Int. Cl.: H04L 9/32

(54) **INTEGRATED PUF**
INTEGRIERTES PUF
PUF (FONCTION PHYSIQUEMENT INCLONABLE) INTEGRÉE

(30) Priority: 17.10.2005 EP 05109654; 22.12.2005 EP 05112740
(43) Date of publication of application: 09.07.2008
(73) Proprietor: Intrinsic ID B.V., 5656 AG Eindhoven (NL)
(72) Inventor: OPHEY, Willem, G., 5656 AE Eindhoven (NL); SKORIC, Boris, 5656 AE Eindhoven (NL); TUYLS, Pim Theo,, 5656 AE Eindhoven (NL)
(74) Representative: DeltaPatents B.V.
(86) International application number: PCT/IB2006/053737
(87) International publication number: WO 2007/046037

(56) References cited:
- EP-A- 1 168 253
- WO-A-2004/031834
- US-A1- 2003 204 743
- US-A1- 2005 018 179
- B Skori ET AL: "Robust Key Extraction from Physical Uncloneable Functions", RoboCup 2008: RoboCup 2008: Robot Soccer World Cup XII, vol. LNCS 3531, 7 October 2005 (2005-10-07), pages 407-422, XP055470322, Cham DOI: 10.1007/11496137_28 ISBN: 978-3-319-10403-4

## Description

The present invention relates to a device for creating challenge-response pairs.

The use of "physically uncloneable functions" (PUFs) for security purposes is known, e.g. from WO 2005/048179.

In the paper "Robust Key Extraction from Physical Uncloneable Functions" by B. Skoric et al., proceedings ACNS 2005, optical PUFs are disclosed consisting of a transparent material containing randomly distributed scattering particles. The output of the optical PUF for a challenge is a speckle pattern. Several noise reduction techniques for such optical PUFs are disclosed.

Incorporating a PUF into a product such as a smartcard, chip, or storage medium makes it extremely difficult to produce a "clone" of the product. In this document "clone" means either a physical copy of the product or a model that is capable of predicting the input- output behavior of the product with reliability. The difficulty of physical copying arises because the PUF manufacturing is an uncontrolled process and the PUF is a highly complex object. Accurate modeling is extremely difficult because of the PUF's complexity; slightly varying the input results in widely diverging outputs. The uniqueness and complexity of PUFs makes them well suited for identification, authentication or key generating purposes.

Typically, a proving party should prove access to a secret by providing a PUF with a *challenge* from which a unique and unpredictable *response* is created. This response is supplied to a verifying party, for verification that the proving party actually has access to the secret. Of course, this proving/verifying procedure should be undertaken without revealing the secret, which typically involves encryption/decryption. A PUF can only be accessed via an algorithm that is inseparable from the PUF, and any attempt to bypass or manipulate the algorithm will destroy the PUF. PUFs are e.g. implemented in tokens employed by users to authorize themselves and thus get access to certain services or devices. The token may for example comprise a smart card communicating by means of radio frequency signals or via a wired interface (such as USB) with the device to be accessed.

To this end, an optical PUF may be employed, which comprises a physical structure containing light scattering material arranged in such a manner that directions in which light is scattered are randomly distributed. The light scattering material can e.g. consist of a piece of epoxy, which contains glass spheres, air bubbles or any kind of scattering particles and/or one or more semi-reflective layers with a predetermined roughness. The epoxy can also be replaced by some other transparent means. Shining a laser through such an optical PUF produces a speckle pattern which strongly depends on properties of the incoming wave front and on the internal structure of the PUF. The input (wave front) can be varied by shifting or tilting the laser or by changing the focus of the laser beam.

Typically, the PUF is illuminated from an input side with a light source (e.g. a laser) and the light scattering material produces speckle patterns on an output side of the PUF which may be detected by means of a camera sensor. The randomness and uniqueness of the light scattering in this material is exploited to create challenge-response pairs and cryptographic key material to be used in authentication and identification schemes. The input (i.e. the challenge) to the optical PUF can e.g. be angle of incidence of the laser, focal distance or wavelength of the laser, a mask pattern blocking part of the laser beam, or any other change in laser beam wave front. The output (i.e. the response) of the optical PUF is the speckle pattern. The input-output pair is usually referred to as a challenge-response pair (CRP). Replicating an optical PUF is very difficult, since even if the exact location of the scattering elements are known, precise positioning of scattering elements in a replica is virtually impossible and very expensive to attain.

The invention is defined in the independent claims. Particular embodiments are set out in the dependent claims.

An object of the present invention is to provide a device for producing challenge-response pairs, which device is cost-effective to manufacture. This object is accomplished by a device in accordance with the independent claim attached hereto. Preferred embodiments of the invention are defined by dependent claims.

According to a first aspect thereof, the present invention provides a device for creating challenge-response pairs, which comprises a radiation source, a challenge-modifying element, a radiation scattering element, and a radiation-detecting element. The radiation source is arranged to create a challenge by irradiating said challenge-modifying element. The laser beam is either incident directly on the challenge-modifying element, or is guided from the laser to the challenge-modifying element by means of for example a reflective element, such as a mirror or a prism etc.

The challenge-modifying element is arranged to alter radiation received from said radiation source and direct said modified radiation towards said radiation scattering element.

The radiation scattering element is arranged to scatter light, which is received from said light source via said challenge-modifying element, and direct said light towards said radiation-detecting element.

The radiation-detecting element is arranged to create a response to said modified and scattered light, which is received from said radiation source via said radiation scattering element. Further, said radiation scattering element is preferably arranged such that the scattered radiation, which reaches said radiation detection element, passes an imaginary plane between said radiation scattering element and said radiation detection element, and said challenge-modifying element and said radiation-detecting element are both arranged on the same side of said imaginary plane.

One advantage of providing the radiation-detecting element and the challenge-modifying element on the same side with respect to said radiation scattering element, is that the device becomes easier to assemble, as the arrangement of the electric wiring of the components is facilitated.

Said challenge-modifying element is preferably arranged to modify said challenge by altering the point of incidence of said radiation at said radiation scattering element, the angle at which said radiation is incident at said radiation scattering element and/or the phase of said radiation incident on said radiation scattering element. In other words, by altering or modifying the challenge, one will also modify the response that corresponds to the modified challenge.

Advantageously, said challenge-modifying element and said radiation-detecting element are both arranged on the same substrate. This facilitates the manufacturing of the device, and it also facilitates the alignment of the components within the device.

Preferably, the radiation source is also arranged on the same side of said imagery plane as is the radiation detection element. Even more preferably, said radiation source is arranged on the same substrate as said challenge-modifying element and said radiation detection element. Hence, one compact integrated element is obtained, comprising all electrically controllable components of the device, which facilitates the assembling of the device. Further, such a compact integrated device facilitates the generation of speckles with an optimum size for being detected by the radiation-detecting elements, based on e.g. CMOS-technology.

According to one embodiment of the invention the challenge-modifying element comprises a translatable and/or pivotable lens. Hence, different challenges can be created by changing the position of said lends and/or by changing the inclination of said lens with respect to its main axis. In this document terms like "transparent" and "reflective" are used for objects which are transparent and reflective, respectively, to a radiation portion emitted from said radiation source, which radiation portion said radiation detection element is sensitive to, possibly the radiation has been frequency converted before it reaches said radiation detection element. One advantage of using a translatable lens, instead of e.g. a static SLM or SPM, is that less components are required for controlling the lens compared to controlling or addressing an SLM comprising a large number of mirrors.

Advantageously, said lens is provided with a reflective surface, and said reflective surface is arranged optically after said lens. In this document, when a first surface is arranged optically after a component, this means that the radiation first reaches said component before it reaches said first surface. The advantage of providing a reflective surface optically after said lens, is that the radiation can easily be directed towards different positions on said scattering element by means of reflection.

Advantageously, said challenge-modifying element comprises a pivotable mirror, which provides an accurate way of changing the angle of incidence of radiation at said light scattering element. According to one embodiment of the invention, said pivotable mirror is also translatable such that different portions of the incident radiation can be reflected by adjusting the position of the mirror.

Advantageously, said challenge-modifying element comprises several separately controllable areas arranged such that each area is able to modify a portion of said incident radiation independently of the other controllable areas. One example, said challenge-modifying element comprises an array of mirrors, wherein each mirror is pivotable independently of the other mirrors. Moreover, each mirror can be set in a number of different inclination states, each state corresponding to a different inclination of the mirror. Hence, by arranging different mirrors in different inclination states a large number of different challenges can be provided.

Said areas can also be liquid crystal (LC) elements or picture elements, which are able to alter the phase of incident radiation individually of each other. In other word, by activating the picture elements, the light which is incident on them will be reflected towards the light scattering element, and a plurality of different challenge-response pairs may be created, as will be described in the following. When liquid crystal elements are exposed to light (either directly from the light source or via the scattering element), light beams will be reflected at the LC elements and undergo a phase change (or a change in polarization state). By arranging the LC elements such that they can be set in a great umber of optical states, the phase of the light appears to change in a continuous manner as compared to a situation where the LC elements are switched between an off-state and an on-state. The reflected light will incide on the light scattering element. Hence, the light which is incident on the scattering element from the light source - the challenge - is modified by the light reflected at the LC elements and a new, modified challenge is created and input to the scattering element. The light scattering element scatters incident light such that a random speckle pattern is created and spread over the light detecting elements. This random pattern is detected by the light detecting elements, and a response to the modified challenge is thus created. Thus, the LC elements will act as a phase or polarization modulator for incident light, which has as an effect that the light which is supplied to the scattering element is modified. Typically, the degree of modification of the challenge is dependent on the number of activated picture elements, as well as actual combination(s) of activated picture elements. A great number of activated picture elements will result in a high degree of challenge modification as well an increase of challenge space. Each new challenge provided to the light scattering element will result in a different speckle pattern for the light which illuminates the light detecting elements. Consequently, each new combination of activated picture elements will render a new, modified challenge and a corresponding new response. A new challenge-response pair is thus created.

Preferably, said challenge-modifying element is a Micro Electro Mechanical System device (MEMS), e.g. a Spatial Light Modulator (SLM) or a Spatial Phase Modulator (SPM), comprising a two dimensional array of movable mirrors.

Said radiation scattering element is preferably arranged optically after said radiation source and optically before said challenge-modifying element. Further, said radiation scattering element is arranged to direct light from said radiation source towards said challenge-modifying element. Moreover, said radiation scattering element is preferably arranged to shape the radiation beam such that its cross section is adapted to the area of the challenge-modifying element. When an SLM, SPM or other relatively large challenge-modifying element is used, said radiation scattering element preferably comprises an elliptically or spherically shaped portion, which collimates the radiation beam before it is incident on said SLM. When a small translatable mirror is used as challenge-modifying element said radiation scattering element preferably comprises a focusing portion, e.g. being elliptically or spherically shaped.

Advantageously, said radiation scattering element is provided with a retro-reflection element, arranged to prevent light from being specularly reflected onto said radiation detection elements, said retro-reflection element preferably being a reflective surface.

Said radiation source is preferably a laser. Said radiation detection element is preferably a CMOS detector.

A basic idea of the present invention is to arrange a radiation detection element, a challenge-modifying element and preferably also a light source on the same side of an imaginary plane, which separates said radiation-detecting element from a radiation scattering element in a device for providing challenge response pairs. Hence, generation of a speckle pattern having a desired minimum speckle size is facilitated and a more easily assembled device is provided. In more detail, a challenge in the form of light emitted onto a light scattering element, which light will be scattered in the light scattering element and detected as a response to the challenge by light detecting elements. A light source in the form of e.g. a laser diode is typically used to produce the light that is emitted onto the scattering element. The light which is incident on the scattering element is referred to as a challenge. The emitted light is scattered and spread across the light detecting elements, wherein a response to the challenge is sensed by the light detecting elements. The light scattering element comprises a transmissive material which contains randomly distributed light scattering particles or simply physical irregularities, which scatter incident light such that a random speckle pattern is created and spread over the light detecting elements. This random pattern is detected by the light detecting elements, and is known as the response to the challenge (i.e. the light) that was supplied to the light scattering element. Hence, a challenge-response pair is created.

Further, by integrating a display comprising a plurality of picture elements (preferably arranged in a matrix), the possible number of challenge-response pairs that can be produced will increase greatly, as has been described in the above.

A detailed description of preferred embodiments of the present invention will be given in the following with reference made to the accompanying drawings, in which:
Fig. 1 shows a schematic cross-sectional side view of a device for creating challenge-response pairs in accordance with the invention, wherein the challenge modifier comprises an SPM.
Fig. 2 shows a schematic cross-sectional side view of a device for creating challenge-response pairs in accordance with the invention, wherein said challenge modifier comprises a pivoting reflecting surface.
Fig. 3 shows a schematic cross-sectional side view of a device for creating challenge-response pairs in accordance with the invention, wherein said challenge modifier comprises a translating mirror lens.
Figs. 4-7 show schematic cross-sectional side views of different embodiments of devices for creating challenge-response pairs in accordance with the invention, wherein the radiation source is arranged on the same substrate as the challenge modifier and the radiation detection element.

Like reference numbers and like designations in these figures refer to like embodiments.

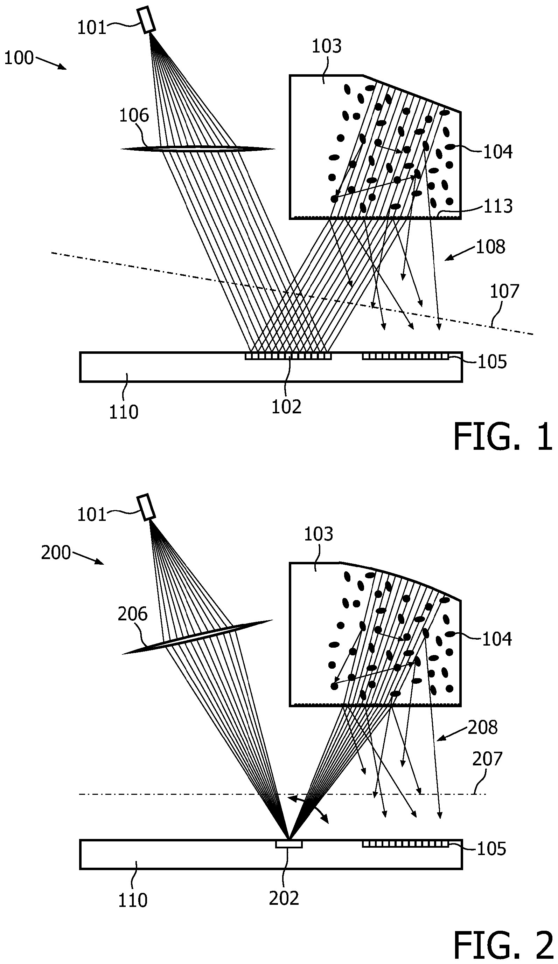

Fig. 1 shows a schematic cross-sectional side view of a device 100 for creating challenge-response pairs according to an embodiment of the present invention. A laser diode 101 arranged to emit light into a light scattering element 103, which is a light transmissive material containing randomly distributed light scattering particles 104. Light incident on the scattering element is randomly scattered onto a plurality of light detectors 105. Consequently, the light scattering element is provided with a challenge in the form of light emitted by the laser diode.

Further, said device 100 comprises a challenge-modifying element 102 in order to vary the challenge, i.e. modify the radiation incident on said radiation scattering element 103 such that a different radiation pattern is sensed by said radiation-detecting element 103. Advantageously, said device 100 comprises an optical element 106 which substantially collimates the laser beam, in order to distribute said laser light evenly over the active area of said challenge-modifying element 102. According to this embodiment the challenge-modifying element 102 comprises an SLM, which in turn comprises pivotable reflective elements, such that the direction of a selected portion of the incident light beam can be altered. By altering the direction of said laser beam, the point of incidence of said laser radiation at said light scattering element 103 is also altered. Hence, the speckle pattern imaged on said radiation detectors 105 is altered, as the laser beam is scattered differently by said radiation scattering element 103. Consequently, the detectors return a different response when the point of incidence is altered. Preferably, the SLM is arranged such that the reflective elements can be rotated independently in two orthogonal directions, such that as many challenges as possible can be obtained.

Alternatively, an SPM can be used instead of said SLM. This SPM can for example be a MEMS (Micro Electro Mechanical System) device consisting of a two-dimensional array of movable mirrors. The activated mirrors cause the light reflected against these mirrors to have a different path length compared to the light reflected by the non-activated pixels or mirrors, and herewith spatially change the phase distribution of the reflected light. For each challenge a different distribution of the mirror-array can be set.

Generally, the radiation scattering element 103 is arranged on a first side of an imaginary plane 107, and said challenge-modifying element 102 and said radiation-detecting element 105 are arranged on a second side of said imaginary plane 107. Consequently, the laser light passes through said imaginary plane at least twice. Once after it has been reflected by said challenge-modifying element 102 but before it is scattered by said radiation scattering element 103 , and once after it has been scattered by said radiation scattering element 103 but before it incides said radiation-detecting element 105. When said radiation-detecting element comprises a flat radiation sensitive surface, said imaginary plane is preferably parallel with said radiation sensitive surface. According to this embodiment of the invention the imaginary plane 107 is not parallel to the sensitive surface of said detecting elements. Optionally, additional scattering means 113 can be arranged at the outgoing surface of said scattering element 103.

Fig. 2 shows a schematic cross-sectional side view of a device 200 for creating challenge-response pairs according to a second embodiment of the present invention. The device illustrated in Fig. 2 is arranged as the device described in relation to Fig. 1, except that the SLM or SPM is exchanged for a small pivotable reflective element, i.e. an element which is arranged to reflect incident radiation, such as a mirror or a prism, wherein the light is reflected by e.g. total internal reflection. Advantageously, the device comprises beam shaping optics 206 which focus the radiation onto said pivotable element. Different challenges are obtained by rotating the element 202 such that the angle of incidence at said radiation scattering element is altered. Preferably, said reflective element is pivotable in two perpendicular directions, such that a vast number challenges can be obtained. Further, said pivotable reflective element can optionally be arranged to the polarization of said laser light in a controllable manner. According to this embodiment of the invention the imaginary plane is parallel to the sensitive surface of the radiation-detecting element 105.

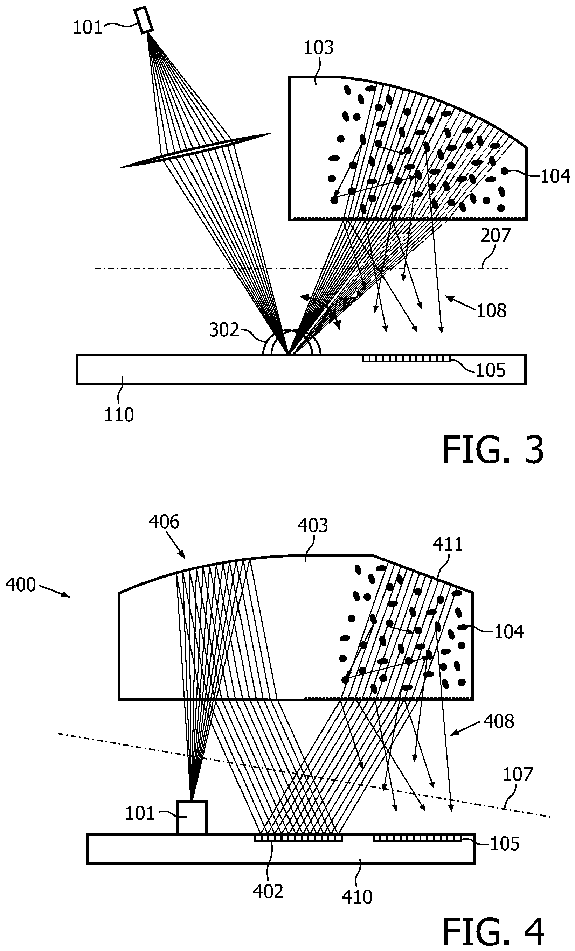

Fig. 3 shows a schematic cross-sectional side view of a device 300 for creating challenge-response pairs according to a third embodiment of the present invention. The device illustrated in Fig. 3 is arranged as the device described in relation to Fig. 2, except that said pivotable reflective element is exchanged for a translating lens 302 which is arranged optically before a reflective surface 309. In this embodiment said lens 302 is hemispherical. The laser beam is preferably focused on said reflective surface. The lens is at least movable in one direction, in order to obtain as many challenges as possible the lens may be translated independently in two perpendicular directions. Preferably said directions are parallel to the surface plane of the substrate 110 whereon the challenge-modifying and radiation detection element can be arranged. In Fig. 3 two different positions of the lens is illustrated. Each position results in a different location of the laser beam focus, and hence in a different angle of incidence for said laser beam. Consequently, a different speckle pattern is generated for each position of the laser beam.

Fig. 4 shows a schematic cross-sectional side view of a device 400 for creating challenge-response pairs according to a fourth embodiment of the present invention. The device illustrated in Fig. 4 is arranged as the device described in relation to Fig. 1, except that the laser 101 is arranged on the same side of said imaginary plane 107 as is said challenge-modifying element 102 and said radiation-detecting element 105. Further, said radiation source 101, said challenge-modifying element 102 and said radiation detection element 105are arranged on a common substrate 410, preferably made of silicon. Additionally, said light scattering element 403 is provided with optical means 406 for directing the laser beam towards said challenge-modifying element. Preferably, said optical means 406 is a reflective spherical surface which is arranged optically after said laser 101 and before said challenge-modifying element 102. Hence, the laser light first enters the light scattering element 403, and is collimated by said optical means such that the laser light is distributed over the whole of said challenge-modifying element 102. The collimated beam is then reflected by the challenge-modifying element 102, before it enters the scattering element 403a second time. The part of the light beam which is not scattered within the radiation scattering element is retro-reflected by a plane reflective surface back towards the challenge-modifying element. In this way no specular light will reach the radiation detection means, and the illuminated area of the radiation scattering element 403 is not increased by this specular reflection.

Generally, a portion of the scattered light 408 will reach the sensitive area of the light detection element on the silicone substrate. The wavelength of the laser radiation, the diameter of the scattered beam emerging from the light scattering element and the distance between the light scattering element and the light detecting element will substantially determine the minimum speckle size on the sensor. The larger the distance between the light scattering particles 104 and the light detecting element 105, the larger the minimum speckle size will be. For a wavelength of 0.8 µm, a beam diameter of 0.4 mm and a distance of 0.5 mm, the minimal speckle size equals 2 µm. In order to accurately determine the speckle pattern, the pixel size should then be less than 1 µm, which is practically obtainable.

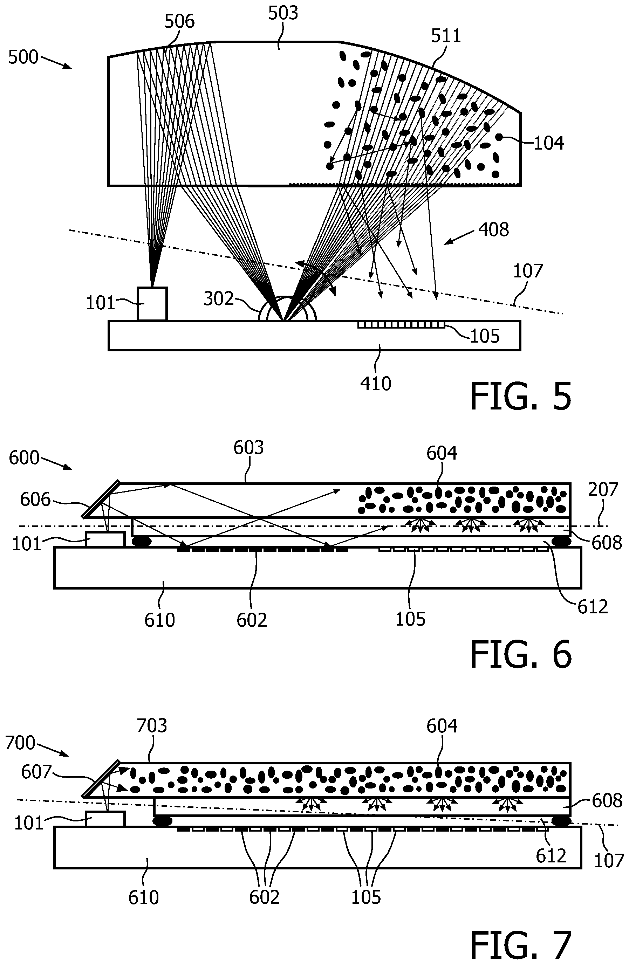

Fig. 5 shows a schematic cross-sectional side view of a device 500 for creating challenge-response pairs according to a fifth embodiment of the present invention. The device illustrated in Fig. 5 is arranged as the device described in relation to Fig. 4, except that the challenge-modifying element is either a pivoting mirror (not shown) such as the one described in relation to Fig. 2, or a translatable lens 302 such as the one described in relation to Fig. 3. One optical means 506 of said radiation scattering element 503 is arranged to focus the light on the challenge-modifying element 102, e.g. by means of a reflective spherical surface. As the laser light is focused by said optical means onto said challenge-modifying element, the retro-reflective surface 511 of said radiation scattering element 503 is preferably spherical, such that the illuminated area of said light scattering element is kept at a minimum.

Fig. 6 shows a schematic cross-sectional side view of a device 600 for creating challenge-response pairs according to a sixth embodiment of the present invention. The device illustrated in Fig. 6 is arranged as the device described in relation to Fig. 4, except that the challenge modifier 602 comprises picture elements, i.e. elements which are arranged to display visible images to a user, and the device is modified accordingly. A liquid crystal (LC) layer 612 is arranged on top of the picture elements and the light detecting elements, and a cover layer is arranged on top of the LC layer. Moreover, on top of the cover layer, the light scattering element 603 is positioned. Said scattering element comprises radiation scattering particles 604. By activating one or more of these picture elements 602, the light which is incident on them will be reflected towards the scattering element 603. The scattering element will not only be provided with direct light from the laser diode 101, but also with light reflected at the activated picture elements. Hence, the activation of the picture elements causes a change in the light which is input to the scattering element. This will bring about a change in the random speckle pattern created by the light scattering element 603 and spread over the light detectors 105. Consequently, modification of the challenge by means of activating picture elements causes a change in the response detected by the light detectors. Hence, new challenge-response pairs may be created by means of controlling the picture elements. The light scattered by the light scattering element is spread across the light detectors 105 via an LC layer 612 in case LCD technology is used. Preferably, a protective glass cover-plate 613 is employed. This cover-plate 613 may be integrated with the scattering element 603. The random light pattern scattered on the light detectors 105 represents the response to the challenge created by the laser diode 101.

Fig. 7 shows a schematic cross-sectional side view of a device 700 for creating challenge-response pairs according to a seventh embodiment of the present invention. The device illustrated in Fig. 7 is arranged as the device described in relation to Fig. 6, except that the picture elements 602 are interspersed with the light detectors 105. By activating one or more of these the picture elements, the light which is incident on them via the light scattering element 603 will be reflected in direction of the scattering element. Now, the scattering element will not only be provided with direct light from the laser diode 101, but also with light reflected at the activated picture elements. Hence, the activation of the picture elements causes a change in the light which is input to the scattering element. This will bring about a change in the random speckle pattern created by the light scattering element 103 and spread over the light detectors 105. Consequently, modification of the challenge by means of activating picture elements causes a change in the response detected by the light detectors. Hence, new challenge-response pairs may be created by means of controlling the picture elements.

Naturally, the interspersement of the challenge-modifying elements and the radiation detection elements can be used in all the above-described embodiments, provided that the challenge-modifying element comprises several separately controllable areas, or matrix elements.

In Figs. 4 to 7, it should be noted that each light scattering element 103, 403, 603, 703 acts as a PUF. However, it is only the part of the scattering element which is arranged with scattering particles 104, 604 that is considered to provide random scatter functionality. Thus, in Figs. 4 to 6, only a part the scattering element 203, 603, 703 provides PUF operation. It is also possible to include a plurality of light scattering elements in the respective challenge-response pair generating device. It is then possible to intersperse picture elements, light detecting elements *and* light scattering elements to create an even greater challenge space.

All the drawings of the embodiments 1 through 7 are two-dimensional representations of a three-dimensional device. Certain optical elements in the drawings, however, need not to be located in one plane. For example light entering the light scattering device will be partly spatially reflected by the entrance surface. In order to avoid this spatially reflected light from reaching the light detectors, these detectors are preferably placed before or after the drawing plane.

In the detailed description of preferred embodiments of the present invention hereinabove, when employing LC technology, the cover glass should be provided with a transparent conducting layer, which is provided with a (constant) voltage.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A device for creating a plurality of challenge-response pairs (100) comprising:
a laser radiation source (101),
a challenge modifying element (102),
a radiation scattering element (103), and
a radiation detecting element (105);
said laser radiation source (101) being arranged to create a challenge by irradiating said challenge modifying element (102);
said challenge modifying element being arranged to modify said laser radiation received from said radiation source and reflect said modified laser radiation towards said radiation scattering element to create a plurality of challenges;
said radiation scattering element being arranged to scatter laser radiation received from said radiation source via said challenge modifying element, and to produce a speckle pattern therefrom; and
said radiation detecting element being arranged to create a response to said modified and scattered laser radiation comprising said speckle pattern, which modified and scattered laser radiation is received from said laser radiation source via said radiation scattering element; wherein
said challenge modifying element (102) and said radiation detection element (105) are arranged on the same substrate (110) on a first side of an imaginary plane (107),
and said radiation scattering element (103) is arranged on a second side of said imaginary plane, such that said scattered radiation intersects said imaginary plane before it reaches said radiation detection element.

2. A device according to claim 1, wherein said challenge modifying element (102) is arranged to modify said challenge by altering:
- the point of incidence of said radiation at said radiation scattering element (103),
- the angle at which said radiation is incident at said radiation scattering element, and/or
- the phase of said radiation incident on said radiation scattering element.

3. A device according to any one of the preceding claims, wherein said challenge modifying element (102) comprises a translatable or pivotable lens (302), optically after which a reflective surface is arranged, said lens preferably being pivotable around two different axis of rotation.

4. A device according to any one of the preceding claims, wherein said challenge modifying element comprises at least one pivotable reflective surface (202).

5. A device according to claim 4, wherein the at least one pivotable reflective surface is arranged to be rotated around two different axes of rotation.

6. A device according to claim 4 or 5, wherein said challenge modifying element comprises several separately controllable areas (102) arranged such that each area is able to modify a portion of said incident radiation independently of the other controllable areas.

7. A device according toany one of claims 4 to 6, wherein said challenge modifying element is a Micro Electro Mechanical System device, and preferably a Spatial Light Modulator or a Spatial Phase Modulator comprising a two dimensional array of movable mirrors.

8. A device according to any one of the claims, wherein said challenge modifying element comprises reflective liquid crystal elements.

9. A device according to any one of the preceding claims, wherein said radiation source (101) is arranged on the same substrate (410) as said challenge modifying element and said radiation detecting element.

10. A device according to claim 9, wherein said radiation scattering element (403) further comprises a reflective focus adjusting element (406) arranged to collimate or refocus radiation which is incident form said radiation source (101), by means of reflection, which focus adjusting element is optically arranged between said radiation source and said radiation modifying element (402).

11. A device according to claim 10, wherein said focus adjusting element (406) is an elliptical reflective surface, and preferably a spherical reflective surface.

12. A device according to any one of the preceding claims, wherein said radiation scattering element (403) is provided with a retro-reflection element (411), arranged to prevent radiation from being specularly reflected onto said radiation detection element (105) from said challenge modifying element (402).

13. A device according to any one of the preceding claims wherein said radiation source (101) comprises a laser diode.

14. A device according to any one of the preceding claims, wherein said radiation scattering element comprises a light transmissive material.

15. A device according to claim 14, wherein said light transmissive material comprises light reflective particles or a semi-reflective layer.

## Patentansprüche

1. Eine Vorrichtung zum Erzeugen einer Vielzahl von Aufforderungs-Antwort-Paaren (100), umfassend:
eine Laserstrahlungsquelle (101),
ein Aufforderungsmodifizierungselement (102),
ein Strahlungsstreuelement (103), und
ein Strahlungsdetektionselement (105);
wobei die Laserstrahlungsquelle (101) dazu eingerichtet ist, eine Aufforderung zu erzeugen, indem sie das Aufforderungsmodifizierungselement (102) bestrahlt;
wobei das Aufforderungsmodifizierungselement dazu eingerichtet ist, die von der Strahlungsquelle empfangene Laserstrahlung zu modifizieren und die modifizierte Laserstrahlung zum Strahlungsstreuelement hin zu reflektieren, um eine Vielzahl von Aufforderungen zu erzeugen;
wobei das Strahlungsstreuelement dazu eingerichtet ist, über das Aufforderungsmodifizierungselement von der Strahlungsquelle empfangene Laserstrahlung zu streuen und ein Specklemuster davon zu erzeugen; und
wobei das Strahlungsdetektionselement dazu eingerichtet ist, eine Antwort auf die modifizierte und gestreute Laserstrahlung zu erzeugen, die das Specklemuster umfasst, wobei die modifizierte und gestreute Laserstrahlung über das Strahlungsstreuelement von der Laserstrahlungsquelle empfangen wird; wobei
das Aufforderungsmodifizierungselement (102) und das Strahlungsdetektionselement (105) auf demselben Substrat (110) auf einer ersten Seite einer gedachten Ebene (107) eingerichtet sind,
und das Strahlungsstreuelement (103) auf einer zweiten Seite der gedachten Ebene derart eingerichtet ist, dass die gestreute Strahlung die gedachte Ebene schneidet, bevor sie das Strahlungsdetektionselement erreicht.

2. Eine Vorrichtung nach Anspruch 1, wobei das Aufforderungsmodifizierungselement (102) dazu eingerichtet ist, die Aufforderung zu modifizieren, indem sie:
- den Einfallspunkt der Strahlung am Strahlungsstreuelement (103),
- den Winkel, in dem die Strahlung am Strahlungsstreuelement einfällt, und/oder
- die Phase der am Strahlungsstreuelement einfallenden Strahlung verändert.

3. Eine Vorrichtung nach einem der vorstehenden Ansprüche, wobei das Aufforderungsmodifizierungselement (102) eine verschiebbare oder schwenkbare Linse (302) umfasst, optisch hinter der eine reflektierende Fläche eingerichtet ist, wobei die Linse vorzugsweise um zwei unterschiedliche Drehachsen schwenkbar ist.

4. Eine Vorrichtung nach einem der vorstehenden Ansprüche, wobei das Aufforderungsmodifizierungselement mindestens eine schwenkbare reflektierende Fläche (202) umfasst.

5. Eine Vorrichtung nach Anspruch 4, wobei die mindestens eine schwenkbare reflektierende Fläche dazu eingerichtet ist, um zwei unterschiedliche Drehachsen gedreht zu werden.

6. Eine Vorrichtung nach Anspruch 4 oder 5, wobei das Aufforderungsmodifizierungselement mehrere getrennt steuerbare Bereiche (102) umfasst, die derart eingerichtet sind, dass jeder Bereich in der Lage ist, einen Teil der einfallenden Strahlung unabhängig von den anderen steuerbaren Bereichen zu modifizieren.

7. Eine Vorrichtung nach einem der Ansprüche 4 bis 6, wobei es sich bei dem Aufforderungsmodifizierungselement um eine Micro Electro Mechanical System-Vorrichtung, und vorzugsweise einen Spatial Light Modulator oder einen Spatial Phase Modulator handelt, der eine zweidimensionale Anordnung beweglicher Spiegel umfasst.

8. Eine Vorrichtung nach einem der Ansprüche, wobei das Aufforderungsmodifizierungselement reflektierende Flüssigkristallelemente umfasst.

9. Eine Vorrichtung nach einem der vorstehenden Ansprüche, wobei die Strahlungsquelle (101) auf demselben Substrat (410) eingerichtet ist wie das Aufforderungsmodifizierungselement und das Strahlungsdetektionselement.

10. Eine Vorrichtung nach Anspruch 9, wobei das Strahlungsstreuelement (403) weiter ein reflektierendes Fokuseinstellelement (406) umfasst, das dazu eingerichtet ist, Strahlung, die von der Strahlungsquelle (101) einfällt, mittels Reflexion zu kollimieren oder zu refokussieren, wobei das Fokuseinstellelement optisch zwischen der Strahlungsquelle und dem Strahlungsmodifizierungselement (402) eingerichtet ist.

11. Eine Vorrichtung nach Anspruch 10, wobei es sich bei dem Fokuseinstellelement (406) um eine ellipsenförmige reflektierende Fläche, und vorzugsweise eine kugelförmige reflektierende Fläche handelt.

12. Eine Vorrichtung nach einem der vorstehenden Ansprüche, wobei das Strahlungsstreuelement (403) mit einem Retroreflexionselement (411) versehen ist, das dazu eingerichtet ist, zu verhindern, dass Strahlung vom Aufforderungsmodifizierungselement (402) auf das Strahlungsdetektionselement (105) spiegelreflektiert wird.

13. Eine Vorrichtung nach einem der vorstehenden Ansprüche, wobei die Strahlungsquelle (101) eine Laserdiode umfasst.

14. Eine Vorrichtung nach einem der vorstehenden Ansprüche, wobei das Strahlungsstreuelement ein lichtdurchlässiges Material umfasst.

15. Eine Vorrichtung nach Anspruch 14, wobei das lichtdurchlässige Material lichtreflektierende Teilchen oder eine halbreflektierende Schicht umfasst.

## Revendications

1. Un dispositif pour créer une pluralité de paires défi-réponse (100) comprenant :
une source de rayonnement laser (101),
un élément de modification de défi (102),
un élément de diffusion de rayonnement (103), et
un élément de détection de rayonnement (105) ;
ladite source de rayonnement laser (101) étant agencée pour créer un défi en irradiant ledit élément de modification de défi (102) ;
ledit élément de modification de défi étant agencé pour modifier ledit rayonnement laser reçu à partir de ladite source de rayonnement et réfléchir ledit rayonnement laser modifié vers ledit élément de diffusion de rayonnement pour créer une pluralité de défis ;
ledit élément de diffusion de rayonnement étant agencé pour diffuser un rayonnement laser reçu à partir de ladite source de rayonnement via ledit élément de modification de défi et pour produire un modèle de tavelures à partir de celui-ci ; et
ledit élément de détection de rayonnement étant agencé pour créer une réponse audit rayonnement laser modifié et diffusé comprenant ledit modèle de tavelures, lequel rayonnement laser modifié et diffusé est reçu à partir de ladite source de rayonnement laser via ledit élément de diffusion de rayonnement ; dans lequel
ledit élément de modification de défi (102) et ledit élément de détection de rayonnement (105) sont agencés sur le même substrat (110) sur un premier côté d'un plan imaginaire (107),
et ledit élément de diffusion de rayonnement (103) est agencé sur un second côté dudit plan imaginaire, de manière que ledit rayonnement diffusé coupe ledit plan imaginaire avant qu'il n'atteigne ledit élément de détection de rayonnement.

2. Un dispositif selon la revendication 1, dans lequel ledit élément de modification de défi (102) est agencé pour modifier ledit défi en altérant :
- le point d'incidence dudit rayonnement au niveau dudit élément de diffusion de rayonnement (103),
- l'angle avec lequel ledit rayonnement est incident au niveau dudit élément de diffusion de rayonnement, et/ou
- la phase dudit rayonnement incident sur ledit élément de diffusion de rayonnement.

3. Un dispositif selon l'une quelconque des revendications précédentes, dans lequel ledit élément de modification de défi (102) comprend une lentille mobile en translation ou pivotante (302), après laquelle, du point de vue optique, une surface réfléchissante est agencée, ladite lentille état de préférence pivotante autour de deux axes de rotation différents.

4. Un dispositif selon l'une quelconque des revendications précédentes, dans lequel ledit élément de modification de défi comprend au moins une surface réfléchissante pivotante (202).

5. Un dispositif selon la revendication 4, dans lequel l'au moins une surface réfléchissante pivotante est agencée pour être pivotée autour de deux axes de rotation différents.

6. Un dispositif selon la revendication 4 ou 5, dans lequel ledit élément de modification de défi comprend plusieurs zones pouvant être commandées séparément (102) agencées de manière que chaque zone soit capable de modifier une portion dudit rayonnement incident indépendamment des autres zones pouvant être commandées.

7. Un dispositif selon l'une quelconque des revendications 4 à 6, dans lequel ledit élément de modification de défi est un dispositif de système micro-électromécanique, et de préférence un modulateur spatial de lumière ou un modulateur spatial de phase comprenant un réseau bidimensionnel de miroirs mobiles.

8. Un dispositif selon l'une quelconque des revendications, dans lequel ledit élément de modification de défi comprend des éléments de cristaux liquides réfléchissants.

9. Un dispositif selon l'une quelconque des revendications précédentes, dans lequel ladite source de rayonnement (101) est agencée sur le même substrat (410) que ledit élément de modification de défi et ledit élément de détection de rayonnement.

10. Un dispositif selon la revendication 9, dans lequel ledit élément de diffusion de rayonnement (403) comprend en outre un élément d'ajustement de foyer réfléchissant (406) agencé pour collimater ou refocaliser un rayonnement qui est incident à partir de ladite source de rayonnement (101), au moyen d'une réflexion, lequel élément d'ajustement de foyer est agencé optiquement entre ladite source de rayonnement et ledit élément de modification de rayonnement (402).

11. Un dispositif selon la revendication 10, dans lequel ledit élément d'ajustement de foyer (406) est une surface réfléchissante elliptique et de préférence une surface réfléchissante sphérique.

12. Un dispositif selon l'une quelconque des revendications précédentes, dans lequel ledit élément de diffusion de rayonnement (403) est muni d'un élément de rétro-réflexion (411), agencé pour empêcher un rayonnement d'être réfléchi de manière spéculaire sur ledit élément de détection de rayonnement (105) à partir dudit élément de modification de rayonnement (402).

13. Un dispositif selon l'une quelconque des revendications précédentes, dans lequel ladite source de rayonnement (101) comprend une diode laser.

14. Un dispositif selon l'une quelconque des revendications précédentes, dans lequel ledit élément de diffusion de rayonnement comprend un matériau transmettant la lumière.

15. Un dispositif selon la revendication 14, dans lequel ledit matériau transmettant la lumière comprend des particules réfléchissant la lumière ou une couche semi-réfléchissante.
